Europäisches Patentamt

European Patent Office

Office européen des brevets

(11) Publication number: **0 177 993**
**A1**

## EUROPEAN PATENT APPLICATION

(21) Application number: 85201408.3

(22) Date of filing: 06.09.85

(51) Int. Cl.⁴: **B 23 Q 1/14**, G 01 B 5/00

(30) Priority: 11.09.84 NL 8402765

(43) Date of publication of application: 16.04.86
Bulletin 86/16

(84) Designated Contracting States: BE DE FR GB IT NL SE

(71) Applicant: N.V. Philips' Gloeilampenfabrieken,
Groenewoudseweg 1, NL-5621 BA Eindhoven (NL)

(72) Inventor: Smulders, Hendricus Franciscus Gerardus, c/o
INT: OCTROOIBUREAU B.V. Prof.Holstlaan 6,
NL-5656 AA Eindhoven (NL)
Inventor: Franken, Adrianus Jacobus Jozef, c/o INT:
OCTROOIBUREAU B.V. Prof.Holstlaan 6, NL-5656 AA
Eindhoven (NL)
Inventor: Faber, Johannes Wilhelmus, c/o INT:
OCTROOIBUREAU B.V. Prof.Holstlaan 6, NL-5656 AA
Eindhoven (NL)
Inventor: Swinkels, Wouter Hendrikus, c/o INT:
OCTROOIBUREAU B.V. Prof.Holstlaan 6, NL-5656 AA
Eindhoven (NL)

(74) Representative: Cuppens, Hubertus Martinus Maria et al,
INTERNATIONAAL OCTROOIBUREAU B.V. Prof.
Holstlaan 6, NL-5656 AA Eindhoven (NL)

(54) Manipulator having six degrees of freedom.

(57) A manipulator having an object holder which can perform movements in three directions of translation and about three axes of rotation. The object holder is connected by means of coupling members to driving members secured to a frame. A modulator construction of the manipulator is provided in that the coupling members for the directions of translation and the directions of rotation are made substantially identical to each other. The driving members of the directions of translation and the directions of rotation are also of substantially identical construction. The modular construction permits a very accurate form of construction to be provided with a minimum number of different components.

"Manipulator having six degrees of freedom".

The invention relates to a manipulator having an object holder which is displaceable with respect to a fixed frame in three substantially orthogonal directions of translation and about at least one axial direction of rotation and which is connected by means of respective substantially identical rod-shaped first and second coupling members to corresponding first and second substantially identical driving members for the first and second directors of translation which are secured to the frame, while the object holder is supported by a rod-shaped third coupling member for a third direction of translation which is directed vertically in its neutral position and which is connected to a third driving member secured to the frame, said object holder being connected by means of a fourth coupling member to a fourth driving member which is secured to the frame for rotation about a first axial direction.

In a known manipulator of the kind mentioned in the opening paragraph (see British Patent Specification Nr. 1.146.472), a table (object holder) can perform three translations in three substantially orthogonal coordinate directions and one rotation about an axis which is at right angles to the plane of the table. One of the translations takes place in a direction at right angles to the plane of the table by means of a coupling member and a driving member, the construction of each of which differs essentially from the corresponding constructions of the coupling members and driving members for the remaining two directions of translation.

A disadvantage of the known manipulator is that a comparatively large number of components of different kinds are required for the coupling members and driving members for the different directions of translation.

**0 177 993**

18-12-1984

Moreover, the number of degrees of freedom of the known manipulator is limited to four, as a result of which the table can rotate about only one axis of rotation.

The invention has for its object to provide a manipulator in which the said disadvantages are avoided.

A manipulator according to the invention is for this purpose characterized in that the first, second and third coupling members and the first, second and third driving members are substantially identical to each other, while the object holder is further connected by means of a fifth and a sixth coupling member to a fifth and a sixth driving member secured to the frame for rotation about a second and a third axial direction, (of rotation), respectively, the fourth, fifth and sixth coupling members, and the fourth, fifth and sixth driving members being substantially identical to each other.

Due to the fact that both the three coupling members and driving members for the three directions of translation and the three coupling members and driving members for the three directions of rotation can be identical to one another, a modulator form of construction can be provided for the manipulator which leads to a comparatively small number of different components. The manipulator therefore is of a simple construction and can be manufactured at comparatively low cost by mass production. This is of especial importance for those manipulators (so-called micro-manipulators) which have to operate in the submicron range, in which stringent requirements are imposed on tolerances. Due to the modular construction of the manipulator and the resulting considerably smaller number of differing types of components, it is comparatively simple to obtain an accurate construction.

A preferred embodiment of the manipulator, which is substantially free from backlash, is further characterized in that the first, second and third coupling members each comprise a rod spring which is clamped at one end to the object holder and is clamped at the other end to a lever of a first kind which is rotatable by means of a microdrive and which constitutes together with the microdrive the relevant driving member.

A further embodiment of the manipulator, in which the rotations of the object holder are essentially independent of the translations, is characterized in that the fourth, fifth and sixth coupling members each comprise a first pair of end-clamped spaced parallel rod springs, which forms a first parallelogram connection between the object holder and a rigid connection member, and a second pair of end-clamped spaced rod springs arranged parallel to the first pair, which forms a second parallelogram connection between the rigid connection member and a lever of a second kind which is rotatable by means of a microdrive and which constitutes together with the microdrive the relevant driving member.

Embodiments of the invention will now be described (more fully) with reference to the drawing, in which:

Figure 1 is a front elevation, partly in section, of the manipulator in accordance with the invention,

Figure 2 is a sectional view taken on the line II-II in Figure 1,

Figure 3 is a sectional view taken on the line III-III in Figure 1,

Figure 4 is a part elevation partly in section taken on the line IV-IV in Figure 3,

Figure 5 is a plan view partly in section taken on the line V-V in Figure 1.

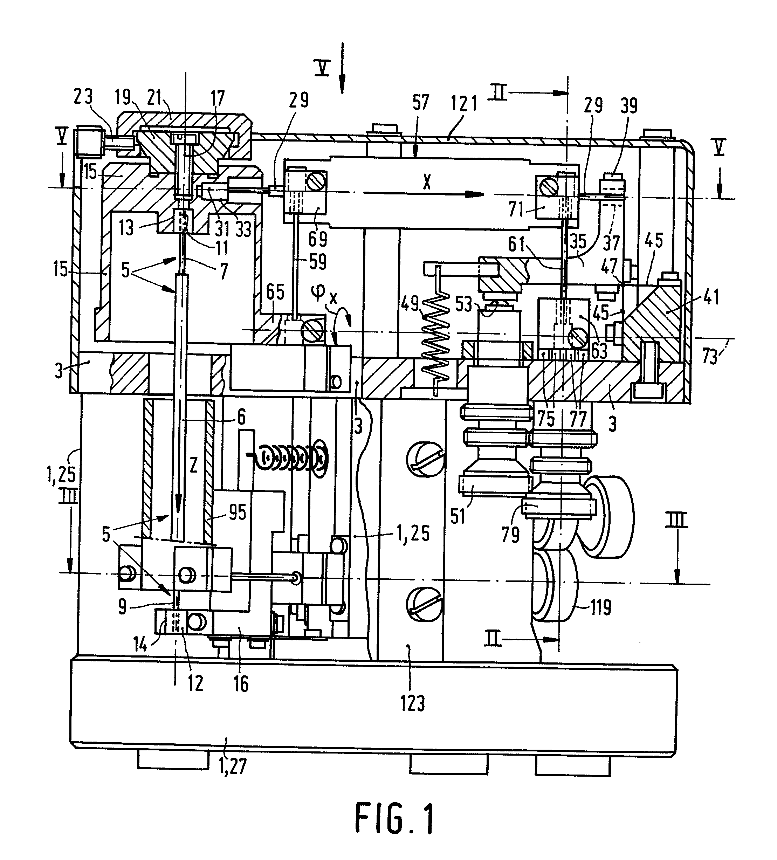

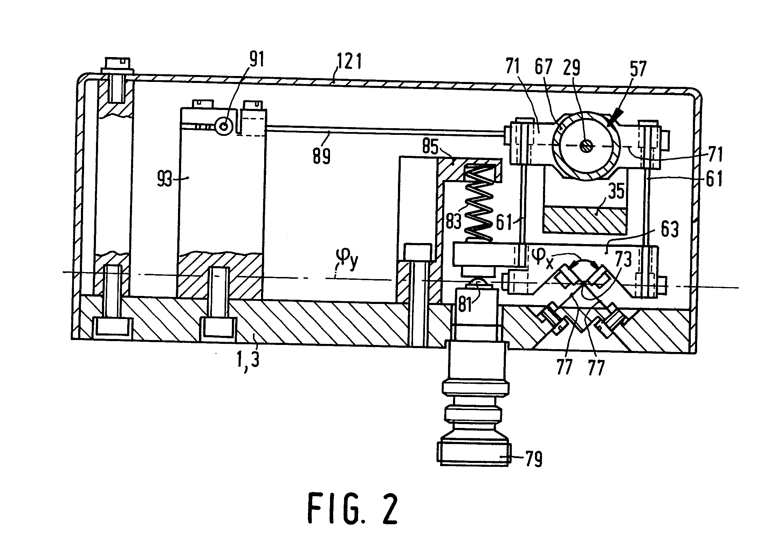

The manipulator shown in Figures 1 and 2 has a base plate 3 arranged in a fixed frame 1. A vertical end-clamped rod spring 5 (third coupling member) having a circular cross-section is provided near its two ends with thin resilient parts 7 and 9, between which a thicker comparatively rigid central part 6 is situated. The resilient parts 7 and 9 are secured in bearing bushes 11 and 12. The bearing bush 11 in itself is resiliently clamped

0 177 993

in a recess 13 of a dish 15, while the bearing bush 12 in itself is resiliently clamped in a recess 14 of a lever 16 (lever of a first kind) to be described hereinafter. The dish 15 has screwed onto it by means of a bolt 17 a disk 19, on which an object holder in the form of a table 21 is secured. The table 21 gripping the disk 19 is fixed by means of a screw 23 with respect to the disk 19. By means of the part 9, the end-clamped rod spring 5 is enabled to flex laterally in any direction with respect to the lever 16. The thickness (rigidity) of the rod spring 5 and the weight of the dish 15, the disk 19 and the table 21 are such that no buckling of the rod spring 5 occurs. A fixedly arranged intermediate block 25 has secured to it a second base plate 27 which is parallel to the first base plate 3. The base plates 3 and 27 constitute together with the intermediate block 25 the frame 1.

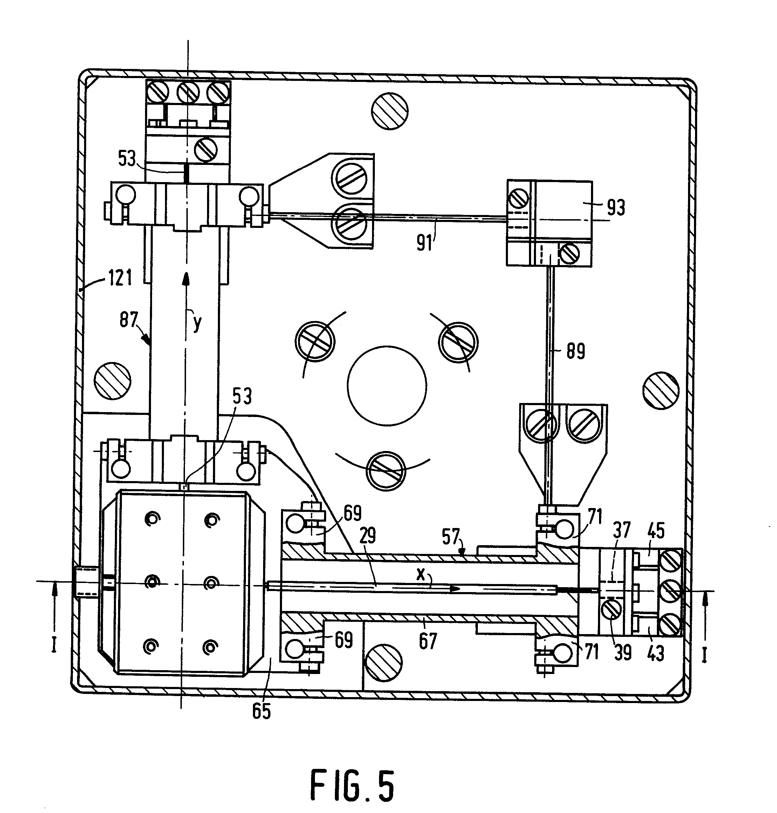

A first coupling member for the first direction of translation X (see Figures 1 and 5) comprises an end-clamped rod spring 29 of circulated cross section, by means of which a tensile force can be exerted on the dish 15. The rod spring 29 is provided at its end adjacent the dish 15 with a bearing bush 31, which is resiliently clamped in a recess 33 of the dish 15. The rod spring 29 is clamped at its other end to a lever 35 of the first kind, which is rotatable about an axis at right angles to the plane of the drawing in Figure 1. Clamping of the rod spring 29 to the lever 35 is effected by means of a bearing bush 37 which is secured to the rod spring and is clamped resiliently by means of a bolt 39 in a bore in the lever 35. The first base plate 3 has secured to it a block 41, on which two pairs 43, 45 of orthogonally disposed crossed blade springs are clamped at one end. The other ends of the blade springs forming the pairs 43 and 45 are also clamped bilaterally to the lever 35. Since the crossing axes of the two pairs 43, 45 of blade springs coincide, an axis of rotation 47 is formed thereby for the lever 35 which remains substantially at a fixed location during a rotation of the lever. A tensile spring 49 is connected at one end to the lever 35 and at its other end to the first base plate 3. Rotation of the lever 35 about the axis of rotation 47 is effected by means of a known so-called microdrive 51 (micrometer type drive) having a differential action (see the book "Feinmechanische Bauelemente", 1972, of S. Hildebrand p. 234), which has a ram 53 which engages the lever 35. The microdrive 51 is operated manually, but may alternatively be coupled to an electric motor which may be servo-controlled. The lever 35 constitutes together with the microdrive 51 the first driving member.

A second coupling member for the second direction of translation Y (see Figure 5) is identical to the first coupling member for the first direction of translation X and is therefore not described further. A rod spring 53 identical to the rod spring 29 is partly visible in Figure 5. Also in this case, the relevant lever is rotated by means of a known microdrive, which is identical to the microdrive 51 and constitutes together with the lever the second driving member.

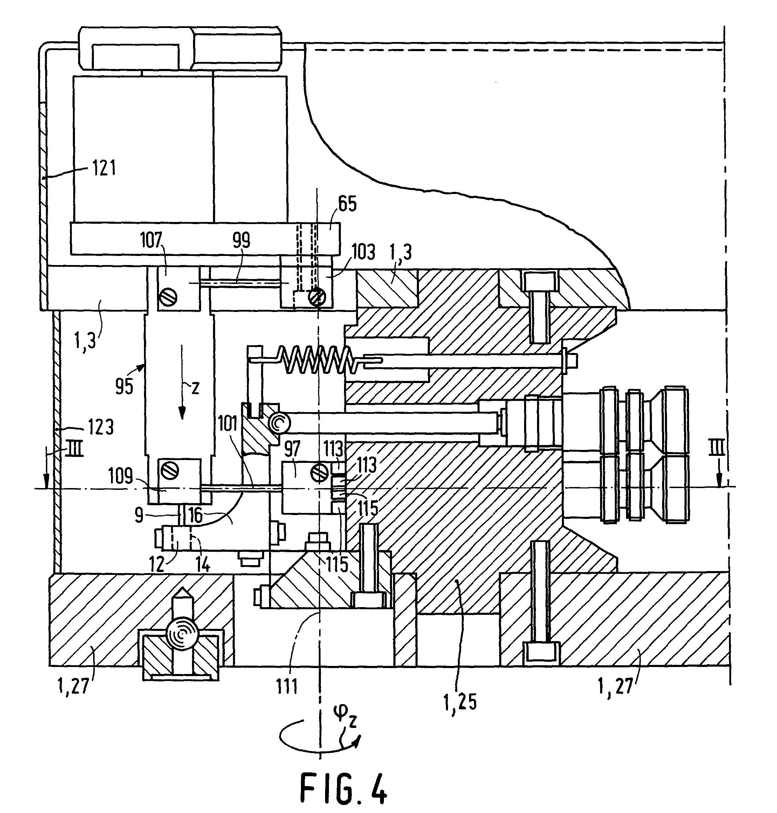

A third coupling member comprising a rod spring 5 for the third direction of translation Z (see Figure 4), which is identical to the first and the second coupling member, is not described either for the sake of brevity. By means of the bearing bush 12, the rod spring 5 is resiliently clamped to the lever 16. It should be noted that the rod springs 29 and 53 also have, like the rod spring 5, a comparatively rigid thicker central portion and thin flexible ends (not designated by reference numerals). In the neutral position of the manipulator and of the table 21, respectively, the rod springs 29 and 53 are at right angles to each other and are located in the same plane. The rod spring 5 then extends in vertical direction in a plane which is at right angles to the plane passing through the rod springs 29 and 53.

A fourth coupling member for a first direction of rotation $\varphi_X$ (see Figures 1 and 2) comprises a rigid connection member 57 in the form of a tube and two pairs

**0 177 993**
18-12-1984

of parallel and identical rod springs 59 and 61, which are resiliently clamped to the dish 15 and to a lever 63 of the second kind, respectively. The four rod springs 59 and 61 are all clamped at one end to the connection member 57 and at the other end to a flange 65 of the dish 15 and to the lever 63, respectively. The two rod springs 59 are therefore clamped to the flange 65, while the two rod springs 61 are clamped to the lever 63. Thus, the rod springs 59 form a parallelogram connection between the connection member 57 and the flange 65, while the rod springs 61 form a parallelogram connection between the connection member 57 and the lever 63. The connection member 57 is constituted by a tube 67 with flanges 69 and 71, in which the rod springs 59 and 61 are resiliently clamped (see Fig. 1). The rod spring 29 for the first direction of translation X extends with in the tube 67. The lever 63 of the second kind is rotatable about an axis 73 in the first direction of rotation $\varphi_X$. The axis 73 is formed by two pairs 75 and 77, of perpendicularly crossing blade springs, which are clamped at one end to the lever 63 and at the other end to the first base plate 3. A rotation in the first direction of rotation $\varphi_X$ about the axis 73 is obtained by means of a known so-called microdrive 79, which has a ram §1 which engages the lever 63 (see Figure 2). The microdrive 79 is operated manually, but may alternatively be driven by an electric motor. A compression spring 83 is clamped between the lever 63 and a support 85 secured to the first base plate 3. The axis 75 remains substantially fixed in location during a rotation of the lever 63. Due to the rigid connection member 57, a rotation of the lever 63 about the axis 73 passed on <u>via</u> the rod springs 61 is transferred accurately <u>via</u> the rod springs 59 to the flange 65 of the dish 15.

A fifth coupling member for the second direction of rotation $\varphi_Y$ (see also Figure 2) is quite identical to the fourth coupling member for the first direction of rotation $\varphi_X$ and is therefore not described further. A connection member 87 identical to the connection member 57 is partly visible in Figure 5. The rotation $\varphi_Y$ is also obtained by means of a microdrive identical to the microdrive 79. The connection members 57 and 87 (for $\varphi_X$ and $\varphi_Y$) can be positionally located by means of rod springs 89 and 91, which are secured at one end to the relevant connection member and at the other end to a common fixedly arranged block 93.

A sixth coupling member for the third direction of rotation $\varphi_Z$ has the same construction as the fourth and the fifth coupling member for the directions of rotation $\varphi_X$ and $\varphi_Y$. The rotation in the direction $\varphi_Z$ has, however, an effect on the dish 15 and the rod spring 5 different from that of the rotations in the directions $\varphi_X$ and $\varphi_Y$, as will be explained more fully.

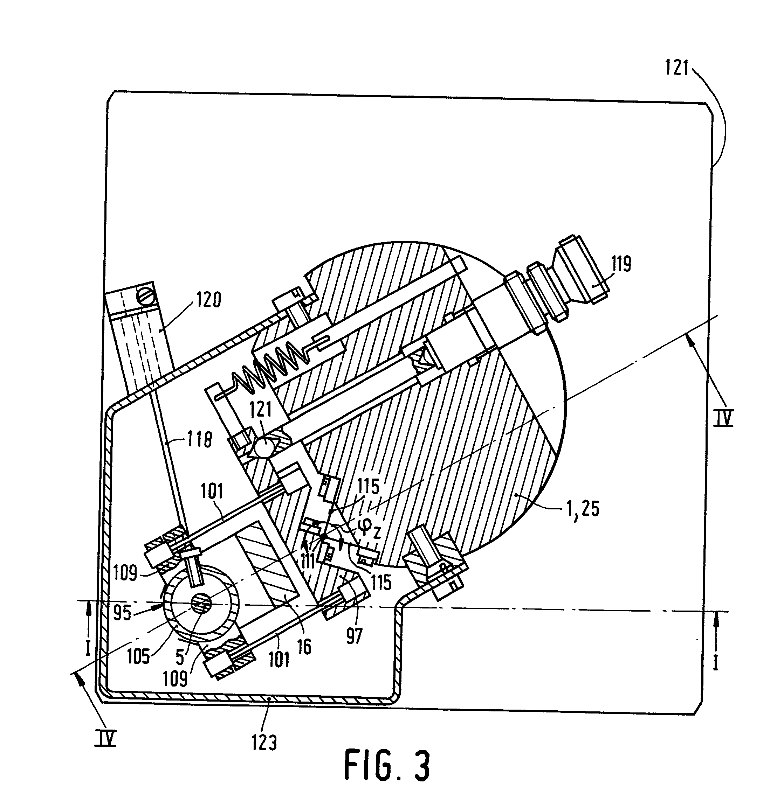

The sixth coupling member comprises a rigid tubular connection member 95 and a lever 97 of the second kind. The connection member 95 is connected by means of two pairs of parallel and identical rod springs 99 and 101 (see Fig. 4) to the dish 15 and to the lever 97, respectively. The four rod springs 99 and 101 are all clamped at one end to the connection member 95 and at the other end to a block 103 secured, respectively, to the flange 65 of the dish 15, and to the lever 97. The two rod springs 99 form a parallelogram connection between the connection member 95 and the block 103, while the two rod springs 101 form a parallelogram connection between the connection member 95 and the lever 97. The connection member 95 comprises a tube 105 with flanges 107 and 109, in which the rod springs 99 and 101 are clamped. The rod spring 5 extends within the tube 105 to provide the third direction of translation Z. The lever 97 is rotatable about an axis 111 in the third direction of rotation $\varphi_Z$. The axis 111 is formed by two pairs 113 and 115, of perpendicularly crossing blade springs which are clamped at one end to the lever 97 and at the other end to the intermediate block 25, which is secured both to the first base plate 3 and to the second base plate 27. The rotation in the third direction of rotation $\varphi_Z$ about the axis 111 is obtained by means of a known microdrive 119, which has a ram 121 which engages the lever 97 (see Figure 3). The microdrive 119 is operated manually, but may alternatively be driven by an electric motor. The axis 111 remains substantially in the same place during a rotation of the lever 97. The connection member 95 is also positioned by means of a rod spring 118, which is secured to a fixedly arranged block 120.

The rod spring 5 is subjected to a bending load during both rotations in the directions of rotation $\varphi_X$ and $\varphi_Y$, whereas during rotation in the direction of rotation $\varphi_Z$ the rod spring 5 is subjected to a torsional load (see Figure 3). Since for all translations and rotations use is made of resilient rod springs, all movements, *i.e.* three translations and three rotations, can take place simultaneously. A translation is one of the directions of translation results at the same time in a translation in the two remaining directions of translation. This is not the case with the rotations. The rotations do not affect one another.

It should be noted that all rod springs are glued in bearing bushes, while all bearing bushes are clamped resiliently. As will be apparent from Fig. 5, such a clamping can be provided by incisions, which are resiliently loaded by a bolt. The manipulator is further provided with a hood 121 and a shield 123.

The rod-shaped coupling members may consist of rods or wires which have a constant cross-section throughout their length. However, if use is made of thinned end portions of circular cross-section, the central part may have a non-circular cross-section (of a form different from the circular form), for example a square cross-section. The rod springs 5, 29 and 53 may be replaced by comparatively rigid rods which have a ball engagement at both ends thereof. Such rods can therefore tilt in any of the required directions. The term rod-shaped coupling member is therefore to be interpreted in such a wide sense that such rigid rods are also included. The rotatable levers of the first and of the second kind may be replaced by translation mechanisms of many different constructions. The microdrives may also be of a kind different from that indicated. For example, it is possible to use piezoelectrically or magnetostrictively acting microdrives.

The manipulator can especially be used successfully for performing small displacements of an object in the submicron range, in which event the object holder may be, for example, a gripper of a robot. For example, the alignment of solid state lasers to optical fibres, the positioning of video-recorder heads, the positioning of an object to be illuminated with respect to the illumination source in the course of semiconductor manufacture and the positioning of a sample to be examined in an X-ray diffraction apparatus are to be considered.

CLAIMS

1.      A manipulator having an object holder, which is displaceable with respect to a fixed frame in three substantially orthogonal directions of translation and about at least one axial direction of rotation and which is connected by means of respective substantially identical rodshaped first and second coupling members to corresponding first and second substantially identical driving members for the first and second directions of translation, which are secured to the frame, while the object holder is supported by a rod-shaped third coupling member for a third direction of translation which is directed vertically in its neutral position and which is connected to a third driving member secured to the frame, said object holder being connected by means of a fourth coupling member to a fourth driving member which is secured to the frame for rotation about a first axial direction, characterized in that the first, second and third coupling members and the first, second and third driving members are substantially identical to each other, while the object holder is further connected by means of a fifth and a sixth coupling member to a fifth and a sixth driving member secured in the frame for rotation about a second and a third axial direction, respectively, the fourth, fifth and sixth coupling members and the fourth, fifth and sixth driving members being substantially identical to each other.

2.      A manipulator as claimed in Claim 1, characterized in that the first, the second and the third coupling members each comprise a rod spring, which is clamped at one end to the object holder and at the other end to a lever of a first kind, which is rotatable by means of a microdrive and which constitutes together with the microdrive the relevant driving member.

3.    A manipulator as claimed in Claim 1, characterized in that the fourth, the fifth and the sixth coupling
member each comprise a first pair of end-clamped,
spaced parallel rod springs, which forms a first parallelogram connection between the object holder and a rigid
connection member, and a second pair of end-clamped,
spaced, rod springs arranged parallel to the first pair,
which form a second parallelogram connection between the
rigid connections member and a lever of a second kind
which is rotatable by means of a microdrive and which
constitutes together with the microdrive the relevant
driving member.

0 177 993

FIG.1

FIG. 2

0 177 993

FIG. 3

FIG. 4

0 177 993

FIG. 5

**0 177 993**
Application number

**EP 85 20 1408**

# European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | GB-A-1 146 472 (PHILIPS)<br>--- | 1 | B 23 Q 1/14<br>G 01 B 5/00 |
| A | LU-A- 58 614 (C.E.A.)<br><br>----- | | |

TECHNICAL FIELDS
SEARCHED (Int. Cl.4)

B 23 Q 1/00
H 05 K 13/00
G 01 B 5/00
G 01 B 11/00
B 25 J 7/00

The present search report has been drawn up for all claims

| Place of search | Date of completion of the search | Examiner |
|---|---|---|
| THE HAGUE | 16-12-1985 | DE GUSSEM J.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82